Europäisches Patentamt

European Patent Office

Office européen des brevets

(11) Veröffentlichungsnummer: **0 350 718**

**A2**

(12) **EUROPÄISCHE PATENTANMELDUNG**

(21) Anmeldenummer: 89111808.5

(22) Anmeldetag: 29.06.89

(51) Int. Cl.4: **B60C 15/04**

(30) Priorität: 13.07.88 DE 3823691

(43) Veröffentlichungstag der Anmeldung:
17.01.90 Patentblatt 90/03

(84) Benannte Vertragsstaaten:
AT BE CH DE ES FR GB GR IT LI LU NL SE

(71) Anmelder: **Continental AG**
**Königsworther Platz 1 Postfach 1 69**
**D-3000 Hannover 1(DE)**

(72) Erfinder: **Pakur, Henryk**
**Brandenburgerstrasse 7**
**D-3062 Bückeburg(DE)**
Erfinder: **Nordloh, Alfons**
**Hemelingstrasse 4**
**D-3000 Hannover 21(DE)**

(54) Wulstkern für einen Fahrzeugluftreifen.

(57) Die Erfindung bezieht sich auf einen ringförmigen Wulstkern, insbesondere für einen Fahrzeugluftreifen, dessen Wülste am radial inneren Umfang einer Felge neben sich nach radial innen erstreckenden Felgenhörnern angeordnet sind, mit einer Kernseele aus mehreren Drähten im Querschnitt und mit zumindest einer die Kernseele konzentrisch umgebenden Lage aus Drähten oder Litzen. Um einen Reifen mit verbesserten Wulstkerneigenschaften zu erhalten, wird vorgeschlagen, daß die Kernseele aus einem einzigen Drahtstück gebildet ist, dessen erster Teil zu einem Drahtring mit mittlerem Kerndurchmesser gebogen ist und dessen übriger Teil mit mehreren Schlägen um diesen Drahtring gewendelt ist, und mit dem Drahtring im Querschnitt eine zwei-, drei- oder vierdrahtige Kernseele bildet.

FIG.3

EP 0 350 718 A2

## Wulstkern für einen Fahrzeugluftreifen

Die Erfindung betrifft einen ringförmigen, im Querschnitt im wesentlichen kreisrunden Wulstkern, insbesondere für einen Fahrzeugluftreifen, dessen Wülste am radial inneren Umfang einer Felge neben sich nach radial innen erstreckenden Felgenhörnern angeordnet sind, mit einer Kernseele aus mehreren Drähten im Querschnitt und mit zumindest einer die Kernseele konzentrisch umgebenden Lage aus Drähten oder Litzen. Die Erfindung bezieht sich weiterhin auf ein Verfahren zur Herstellung eines solchen Ringkerns.

Ein Fahrzeugrad mit radial innen an der Felge angeordneten Reifenwülsten wird z.B. in der DE-OS 30 00 428 beschrieben. In der DE-OS 36 02 873 wird ein Wulstkern für einen derartigen Reifen vorgeschlagen, bei dem die Innenseele und/oder die Festigkeitsträger der weiteren Lagen als rohrförmige, innen hohle Elemente ausgebildet sind. Beim Fahrzeugreifen der eingangs genannten Art werden die Wulstkerne vor allem bei der Reifenmontage besonders stark beansprucht, wenn die Wülste über die Felgenhörner gedrückt werden. Es ist wichtig, daß hierbei am Wulstkern keine bleibenden Verformungen entstehen. Während des Fahrbetriebs werden die Wulstkerne der genannten Reifen im Gegensatz zu denen herkömmlicher Reifen nicht nur auf Zug beansprucht, sondern überwiegend auf Druck. Es ist dafür zu sorgen, daß die Kerne bei den auftretenden Kräften nicht seitlich ausknicken können.

Aus der FR-PS 631 784 ist ein Reifenwulst bekannt, bei dem die Kernseele aus vier umeinandergewickelten Einzeldrähten besteht und bei dem zumindest eine weitere Lage eng aneinanderliegender Drähte vorhanden ist. Bei den bekannten Kernen dieser Art besteht die Innenseele aus vier Einzeldrähten, deren Enden miteinander verschweißt sind.

Der Erfindung liegt die Aufgabe zugrunde, für einen Fahrzeugluftreifen, insbesondere für einen Reifen der eingangs genannten Art, einen Wulstkern mit verbesserten Eigenschaften hinsichtlich der geschilderten Probleme bei der Reifenmontage anzugeben, ohne daß seine Druckstabilität vermindert wird.

Diese Aufgabe wird erfindungsgemäß dadurch gelöst, daß die Kernseele aus einem einzigen Drahtstück gebildet ist, dessen erster Teil zu einem Drahtring mit mittlerem Kerndurchmesser gebogen ist und dessen übriger Teil mit mehreren Schlägen um diesen Drahtring gewendelt ist, und mit dem Drahtring im Querschnitt eine zwei-, drei- oder vierdrahtige Kernseele bildet.

Ein Verfahren zur Herstellung des Wulstkerns ist dadurch gekennzeichnet, daß die Kernseele aus einem einzigen Drahtstück einer mehrfachen Kernumfangslänge hergestellt wird, daß der Draht in seinem ersten Teil zu einem Drahtring mit mittlerem Kerndurchmesser gebogen wird, der Ringanfang durch Heftung oder auf andere Weise am Draht gehalten wird und daß der übrige Teil des Drahtstücks mit mehreren Schlägen um diesen Drahtring gewendelt wird.

Der erfindungsgemäße Wulstkern weist den Vorteil einer äußerst flexiblen Kernseele auf. Durch die Fertigung der Kernseele aus einem einzigen Draht vermeidet man in vorteilhafter Weise Schwachstellen, die bei üblichen Wulstkernen durch das Verschweißen mehrerer Drahtenden vorhanden sind. Derartige Schwachstellen können sich vor allem bei einer Druckbeanspruchung des Kerns auswirken, wie es bei Reifen der eingangs genannten Art der Fall ist.

Gemäß einer vorteilhaften Ausgestaltung der Erfindung wird die erfindungsgemäße Kernseele mit einer Lage in Form einer eingängigen Drahtwendel mit eng aneinanderliegenden Windungen kombiniert. Durch eine derartige Konstruktion erhält man zum einen den Vorteil, daß der Wulstkern für die Reifenmontage äußerst flexibel ist, auf der anderen Seite im Fahrbetrieb, wenn er auf Druck beansprucht wird, eine extrem hohe Druckstabilität aufweist. Der Begriff Druckstabilität soll hierbei die Eigenschaft Knicksteifigkeit umfassen. Gemäß einer weiteren vorteilhaften Ausgestaltung der Erfindung schließt sich an die Kernseele eine Zwischenlage aus eng aneinanderliegenden Drähten oder Litzen einer mehrgängigen Wendel an, während die bereits genannte eingängige Drahtwendel als Außenlage vorliegt. Hierdurch weisen die einzelnen Windungen der eingängigen Drahtwendel einen besonders großen Durchmesser auf, was zu einem Wulstkern mit extrem hoher Knicksteifigkeit führt. Vorteilhafte Ausgestaltungen der Erfindung sind den Unteransprüchen zu entnehmen.

Nachfolgend werden mehrere Ausführungsbeispiele der Erfindung anhand einer Zeichnung näher erläutert. Es zeigt

Fig. 1 eine fertige Wulstkernseele in einer Seitenansicht,

Fig. 2 die Kernseele der Fig. 1 im Bereich II,

Fig. 3 das Fertigungsverfahren (schematisch) für die Kernseele der Fig. 1 aus einem einzigen Draht,

Fig. 4 einen Wulstkern mit einer dreidrahtigen Kernseele und einer einzigen Außenlage aus Drähten einer mehrgängigen Wendel in einer perspektivischen Teilansicht,

Fig. 5 einen Wulstkern mit einer dreidrahtigen Kernseele und einer einzigen Außenlage in Form einer eingängigen Drahtwendel in einer perspektivischen Teilansicht,

Fig. 6 einen Wulstkern gemäß Fig. 5 jedoch mit einer weiteren Außenlage in Form einer mehrgängigen Wendel,

Fig. 7 einen Wulstkern gemäß Fig. 4 jedoch mit einer weiteren Außenlage in Form einer eingängigen Wendel.

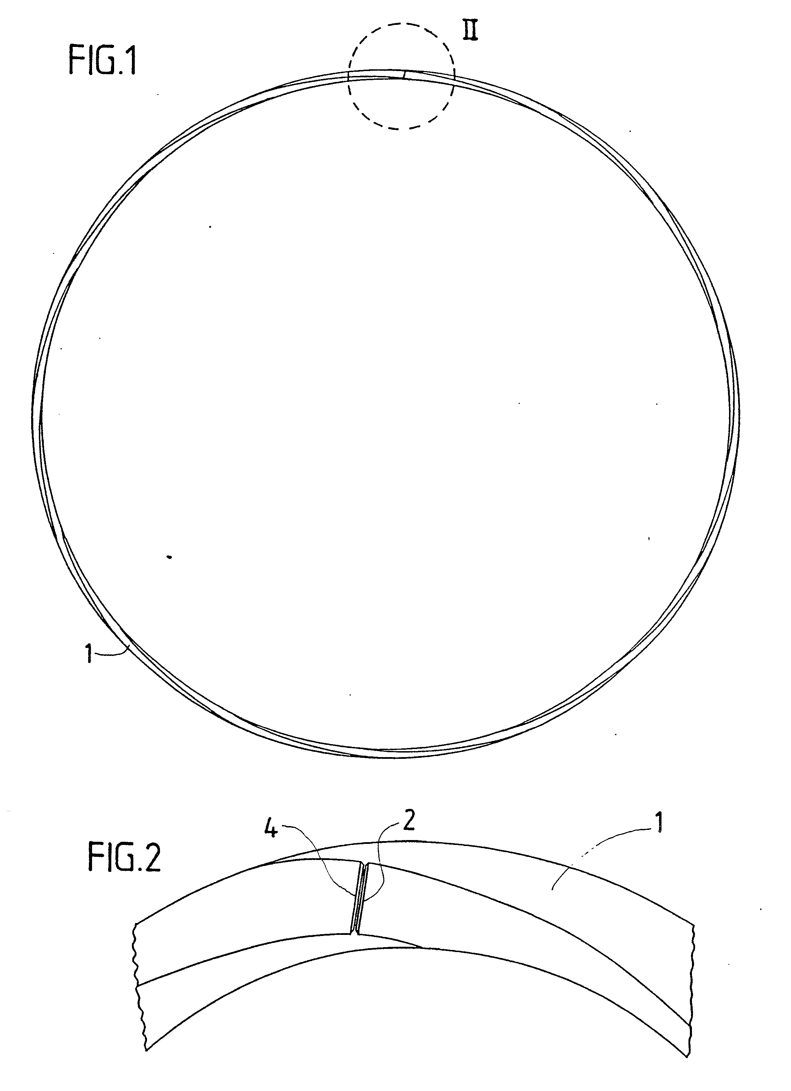

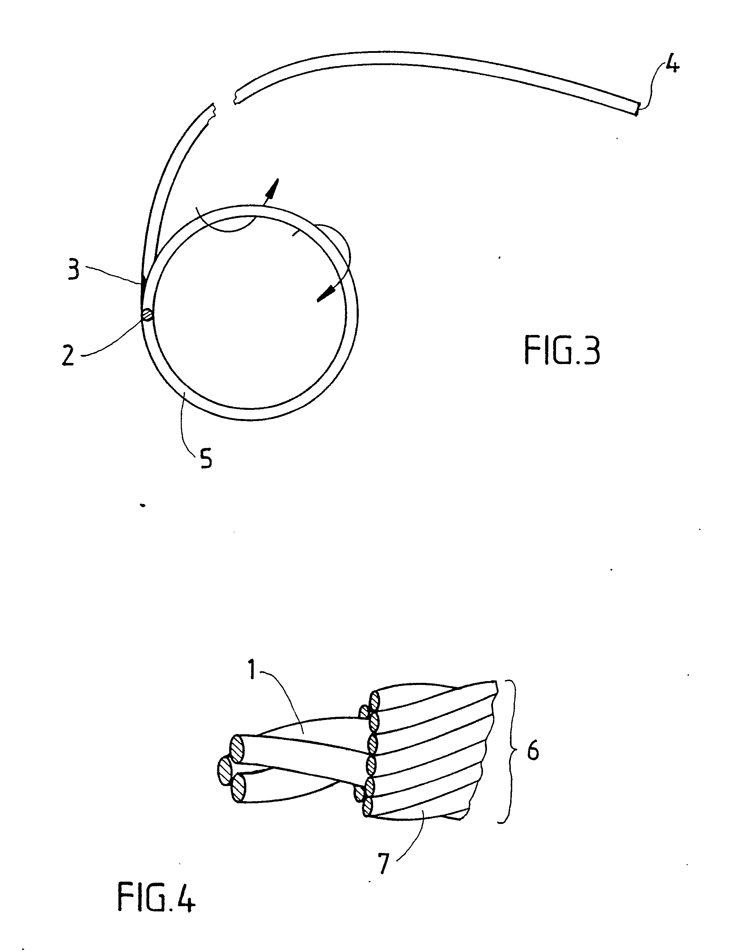

Die Wulstkernseele 1 der Fig. 1 bis 3 wird in der Weise hergestellt, daß aus einem einzigen Draht zunächst ein Drahtring mit mittlerem Kerndurchmesser gebogen wird und der Ringanfang 2 durch Heftung oder Klemmung am übrigen Draht befestigt wird. Dies ist in Fig. 3 durch eine Lötstelle 3 angedeutet. Anschließend wird der restliche Draht um diesen Drahtring gewendelt, und zwar mit 5 bis 10 Schlägen. Gemäß einer bevorzugten Ausführungsform ist die Drahtlänge für die Kernseele 1 derart gewählt, daß sich bei der fertigen Kernseele 1 an jeder Stelle ihres Querschnitts drei Drähte befinden und daß ca. 6 Schläge vorhanden sind. Das Ende 4 des Drahtes kann mit dem Drahtanfang 2 durch Lötung, Verschweißen oder mittels einer Hülse verbunden werden. Das Wickeln der Kernseele 1 kann in der Weise erfolgen, daß die benötigte Drahtlänge bereits vorher von einer Rolle abgeschnitten wird oder aber daß man die Drahtrolle durch den zuerst gebildeten Drahtring 5 hindurchführt und nach Erreichen der gewünschten Anzahl von Umfangslängen abschneidet. Anstelle von drei Umfangslängen für die Kernseele 1 können bei Bedarf auch zwei oder vier in Frage kommen. Beim Wickeln der Kernseele 1 paßt sich der anfänglich glatte Drahtring 5 den um ihn herumgelegten Windungen an. Für die Herstellung der Kernseele 1 wird ein Stahldraht verwendet, dessen Durchmesser zwischen 0,8 und 3,6 mm liegen kann. Für PKW-Kerne sind Durchmesser bis 2,6 mm zweckmäßig, während für LKW- auch größere notwendig sein können. Die Verbindungsstelle in Form einer Lötstelle 3 (Fig. 3) kann als vorübergehendes Hilfsmittel bei der Fertigung der Kernseele 1 dienen oder aber dauerhaft ausgebildet sein. Für die Optimierung der Flexibilitätseigenschaften ist eine vorübergehende Heftung bzw. Klemmung von Vorteil.

Der Wulstkern der Fig. 4 ist mit einer Kernseele 1 der Fig. 1 ausgestattet und weist weiterhin eine Außenlage in Form einer mehrgängigen Wendel 6 aus eng aneinanderliegenden Drähten 7 auf. Auch für diese Außenlage können Drähte mit einem Durchmesser zwischen 0,8 und 3,6 mm verwendet werden. Damit die Drähte 7 der mehrgängigen Wendel 6 eng aneinanderliegen, ist es zweckmäßig, ihren Durchmesser kleiner zu wählen als den des Kernseelendrahtes. Mit zwölf Kerndrähten 7 wurde eine mehrgängige Wendel 6 erzeugt, in der die Drähte 7 zum einen unmittelbar aneinanderliegen zum anderen unmittelbar am Hüllkreis anliegen, der von der Kernseele 1 gebildet wird. Die Wendel 6 weist etwa die gleiche Schlagzahl auf wie die Kernseele 1 oder aber eine höhere. In Einzelfällen kann auch eine niedrigere Schlagzahl zweckmäßig sein.

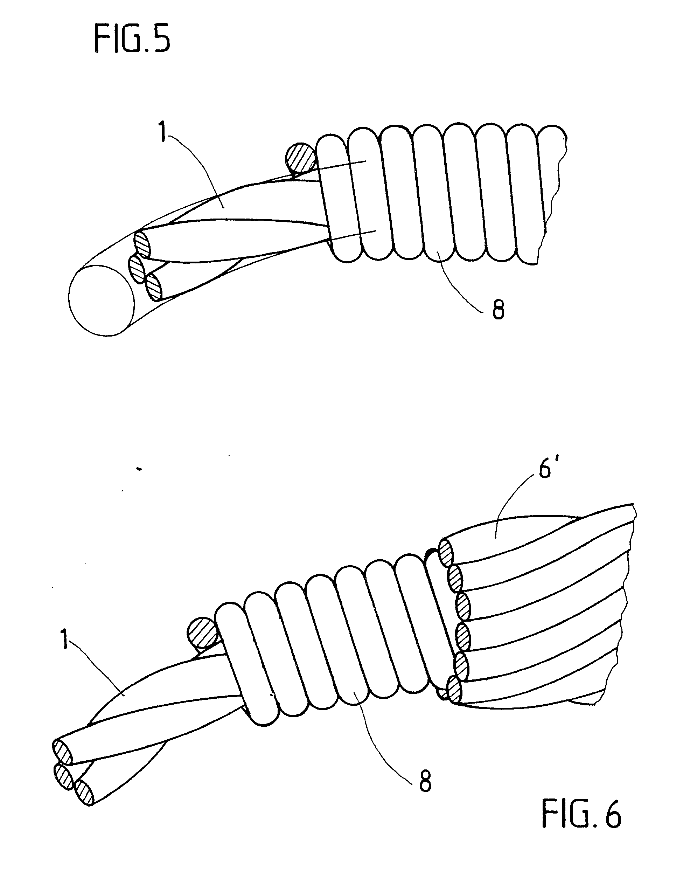

In Fig. 5 ist ein Wulstkern dargestellt, der wiederum mit einer im Querschnitt dreidrahtigen Kernseele 1 versehen ist und als einzige Außenlage eine eingängige Wendel 8 aus einem einzigen Draht mit eng aneinanderliegenden Windungen aufweist. Es ist ohne weiteres ersichtlich, daß die Wendel 8 einen Wulstkern mit extrem hoher Druckstabilität erzeugt, weil sie in Umfangsrichtung des Wulstkerns nicht zusammendrückbar ist. Der Innendurchmesser der Wendel 8 wird bevorzugt ebenfalls so gewählt, daß die Wendel 8 an dem von der Kernseele 1 gebildeten Hüllkreis anliegt. Die Schlagzahl für die Wendel 8 hängt von dem Durchmesser der Drähte der Kernseele 1 wie auch vom Durchmesser des Wendeldrahtes ab und liegt zwischen 500 und 2000.

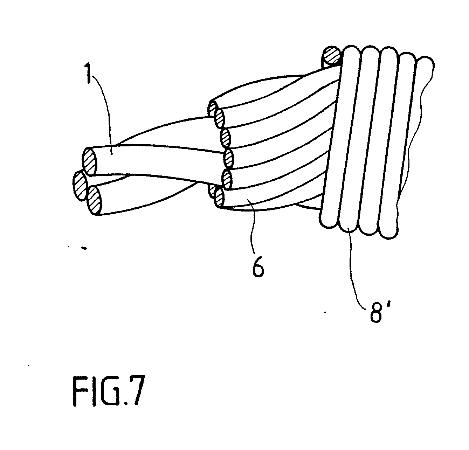

Fig. 6 zeigt einen Wulstkern mit einer im Querschnitt dreidrahtigen Kernseele 1 und einer Zwischenlage in Form einer eingängigen Wendel 8 gemäß Fig. 5 sowie einer Außenlage 6′ in Form einer mehrgängigen Wendel aus eng aneinanderliegenden Drähten, wie sie im Beispiel der Fig. 4 beschrieben worden ist. In Fig. 7 ist schließlich eine Variante skizziert, bei der ein Wulstkern gemäß Fig. 4 zusätzlich mit einer Außenlage in Form einer eingängigen Drahtwendel 8′ mit eng aneinanderliegenden Windungen versehen ist. Sie bietet gegenüber dem Beispiel der Fig. 6 den Vorteil, daß aufgrund des vergrößerten Durchmessers der eingängigen Wendel 8′ eine besonders hohe Druckstabilität erzielt wird.

Es sollte angemerkt werden, daß in allen vorstehend beschriebenen Beispielen die Innenseele 1 und die eingängigen Wendeln 8, 8′ aus einem Einzeldraht bestehen sollten, während für die mehrgängigen Wendeln 6, 6′ anstelle von Drähten 7 auch Litzen in Frage kommen. Wenn es auch für zweckmäßig gehalten wird, daß bei den Wendeln der Kernseele, der Zwischenlage und der Außenlage jeweils benachbarte Wendeln entgegengesetzte Gangrichtung aufweisen, können bei Bedarf auch andere Gestaltungen gewählt werden. Ebenso kann bei Bedarf der radiale Abstand zwischen den Wendeln der Kernseele und der benachbarten Lage bzw. zwischen zwei benachbarten Lagen von dem bevorzugten Wert null abweichen.

**Ansprüche**

1. Ringförmiger, im Querschnitt im wesentlichen kreisrunder Wulstkern, insbesondere für einen Fahrzeugluftreifen, dessen Wülste am radial inneren Umfang einer Felge neben sich nach radial innen erstreckenden Felgenhörnern angeordnet sind, mit einer Kernseele aus mehreren Drähten im Querschnitt und mit zumindest einer die Kernseele konzentrisch umgebenden Lage aus Drähten oder Litzen, **dadurch gekennzeichnet,** daß die Kernseele (1) aus einem einzigen Drahtstück gebildet ist, dessen erster Teil zu einem Drahtring (5) mit mittlerem Kerndurchmesser gebogen ist und dessen übriger Teil mit mehreren Schlägen um diesen Drahtring (5) gewendelt ist, und mit dem Drahtring (5) im Querschnitt eine zwei-, drei- oder vierdrahtige Kernseele (1) bildet.

2. Wulstkern nach Anspruch 1, dadurch gekennzeichnet, daß die Enden (2, 4) des Drahtstücks der Kernseele (1) miteinander verbunden, insbesondere verschweißt sind.

3. Wulstkern nach Anspruch 1, gekennzeichnet durch eine im Querschnitt dreidrahtige Kernseele (1) und eine einzige Außenlage, in der die Drähte (7) oder Litzen in einer mehrgängigen Wendel (6) um die Kernseele (1) gewickelt sind und eng aneinanderliegen.

4. Wulstkern nach Anspruch 1, gekennzeichnet durch eine im Querschnitt dreidrahtige Kernseele (1) und eine einzige Außenlage in Form einer eingängigen Wendel (8) aus einem einzigen Draht mit eng aneinanderliegenden Windungen.

5. Wulstkern nach Anspruch 1, dadurch gekennzeichnet, daß die Kernseele (1) mit einer Zwischenlage in Form einer eingängigen Drahtwendel (8) mit eng aneinanderliegenden Windungen umgeben ist und daß sich nach außen hin eine Außenlage aus eng aneinanderliegenden Drähten oder Litzen einer mehrgängigen Wendel (6') anschließt.

6. Wulstkern nach Anspruch 1, dadurch gekennzeichnet, daß die Kernseele (1) mit einer Zwischenlage aus eng aneinanderliegenden Drähten (7) oder Litzen einer mehrgängigen Wendel (6) versehen ist und daß sich nach außen hin eine Außenlage in Form einer eingängigen Drahtwendel (8') mit eng aneinanderliegenden Windungen anschließt.

7. Wulstkern nach Anspruch 1, 3, 4, 5 oder 6, dadurch gekennzeichnet, daß der radiale Abstand zwischen den Wendeln der Kernseele (1) und der benachbarten Lage bzw. zwischen zwei benachbarten Lagen im wesentlichen null beträgt.

8. Wulstkern nach Anspruch 1, 3, 4, 5 oder 6, dadurch gekennzeichnet, daß bei den Wendeln der Kernseele (1), der Zwischenlage und der Außenlage jeweils benachbarte Wendeln entgegengesetzte Gangrichtung aufweisen.

9. Wulstkern nach Anspruch 1, dadurch gekennzeichnet, daß die Kernseele (1) und die weiteren Lagen aus Drähten aufgebaut sind, deren Durchmesser 0,8 bis 3,6 mm beträgt.

10. Wulstkern nach Anspruch 1, dadurch gekennzeichnet, daß die Wendel der Kernseele (1) mindestens fünf Schläge aufweist.

11. Wulstkern nach Anspruch 4, 5 oder 6, dadurch gekennzeichnet, daß die eingängige Wendel (8, 8') zwischen 500 und 2000 Schläge aufweist.

12. Verfahren zur Herstellung eines ringförmigen, im wesentlichen kreisrunden Wulstkerns nach Anspruch 1, dadurch gekennzeichnet, daß die Kernseele aus einem einzigen Drahtstück einer mehrfachen Kernumfangslänge hergestellt wird, daß der Draht in seinem ersten Teil zu einem Drahtring mit mittlerem Kerndurchmesser gebogen wird, der Ringanfang durch Heftung oder auf andere Weise am Draht gehalten wird und daß der übrige Teil des Drahtstücks mit mehreren Schlägen um diesen Drahtring gewendelt wird.

FIG.1

II

1

FIG.2

4

2

1

4

3

2

5

FIG.3

1

6

7

FIG.4

FIG.5

1

8

6'

1

8

FIG.6

FIG.7